**Europäisches Patentamt**

**European Patent Office**

**Office européen des brevets**

(19)

(11) Numéro de publication: **0 168 283**
**B1**

(12)

# FASCICULE DE BREVET EUROPEEN

(45) Date de publication du fascicule du brevet:
**30.03.88**

(51) Int. Cl.⁴: **C 02 F 3/12**, B 01 J 8/20,
B 01 J 8/38

(21) Numéro de dépôt: **85401088.1**

(22) Date de dépôt: **03.06.85**

(54) Procédé et réacteur à lit fluidisé pour traitement biologique, notamment d'eau.

(30) Priorité: **13.06.84 FR 8409235**

(43) Date de publication de la demande:
**15.01.86 Bulletin 86/3**

(45) Mention de la délivrance du brevet:
**30.03.88 Bulletin 88/13**

(84) Etats contractants désignés:
**BE CH DE GB IT LI**

(56) Documents cités:
**FR - A - 1 592 403**

**P.F. COOPER et al.: "Biological fluidised bed treatment of water and wastewater", 1981, pages 167, 362, 366, 367, Ellis Horwood LTD., Chichester, GB,**

(73) Titulaire: **"DEGREMONT" Société dite:, 183, Avenue du 18 Juin 1940, F-92508 Rueil-Malmaison Cédex (FR)**

(72) Inventeur: **Bernard, Jacques, 5, Boulevard Victor Hugo, F-78100 Saint Germain en Laye (FR)**
Inventeur: **Rovel, Jean-Marie, 74, rue Sophie Rodrigues, F-92500 Rueil Malmaison (FR)**

(74) Mandataire: **Armengaud Ainé, Alain, Cabinet ARMENGAUD AINE 3 Avenue Bugeaud, F-75116 Paris (FR)**

ACTORUM AG

## Description

La présente invention concerne les réacteurs à lit fluidisé et en particulier ceux utilisés pour le traitement d'eau par voie biologique dans lesquels un lit fluidisé de particules de matières solides granulaires est mis en suspension dans un courant liquide s'écoulant du bas vers le haut de l'appareil de façon à utiliser pleinement la très grande surface spécifique disponible sur ces particules-support continuellement en mouvement et exposées de tous côtés au liquide à épurer.

La technique de la fluidisation est bien connue et appliquée pour réaliser de nombreuses réactions chimiques, des échanges de chaleur, des combustions, etc..., ainsi que le traitement biologique d'eau par voie anaérobie ou aérobie. En traitement de l'eau, l'agent de fluidisation est généralement l'eau, qu'il y ait ou non rapport ou formation de gaz. A partir d'une certaine vitesse uniforme et verticale du fluide à travers une couche homogène de grains, il y a expansion de celle-ci; les grains ne sont plus jointifs et sont agités. La section de passage disponible pour le fluide augmente et, jusqu'à une vitesse supérieure limite, les grains demeurent en équilibre entre la force de gravité et les forces d'entraînement par le fluide. A l'intérieur de la gamme de vitesse du liquide assurant la fluidisation, la surface supérieure du lit de matière granulaire, quoique turbulente, est aisément repérable et elle est sensiblement horizontale. L'expansion du lit est supérieure à 10% et normalement comprise entre 20 et 60% par rapport à l'état initial du lit au repos.

Par rapport aux techniques traditionnelles, des réacteurs à cultures libres ou des réacteurs à cultures immobilisées sur lits fixes, utilisées en traitements des eaux par voie biologique, cette technique présente de nombreux avantages: excellente mise en contact de l'eau à épurer et de la masse bactérienne se développant sur les grains; renouvellement des surfaces de contact solide-liquide; faible perte de charge entraînée par l'apport de pollution lui-même.

En outre, il est bien connu que les réacteurs biologiques à lit fluidisé permettent d'atteindre des charges volumiques très supérieures à celles permises par les techniques des réacteurs à cultures libres et des réacteurs à culture immobilisée sur lits fixes. Pour les procédés anaérobies par exemple qui sont particulièrement bien adaptés aux réacteurs à lit fluidisé — car il n'existe pas de sujétion de rendement de diffusion d'oxygène du gaz vecteur comme dans les procédés aérobies — des charges de 30 à 50 kg DCO/m³/jour sont applicables sur des lits fluidisés traitant des effluents industriels, en particulier ceux en provenance de nombreux procédés mis en oeuvre dans l'industrie agro-alimentaire. La technique des lits fluidisés est également très bien adaptée à l'élimination des nitrates des eaux souterraines.

Cependant, la difficulté de disposer de moyens fiables, simples et d'entretien aisé pour assurer la répartition du fluide à épurer à la base des réacteurs à lit fluidisé a entravé jusqu'à présent le développement de réalisations industrielles de tels réacteurs, alors que de nombreuses études de laboratoire ou sur stations pilotes de dimension réduite ont confirmé l'intérêt des réacteurs fluidisés sur le plan purement biocinétique.

En effet, l'homogénéité de cette répartition et la constance de cette homogénéité sont fondamentales. Une inégale répartition conduit à des renardages, à la création simultanée de zones insuffisamment agitées et de zones fortement turbulentes. Il y a baisse des performances avec perte de matériau granulaire.

Les dispositifs assurant l'alimentation de l'eau sous une répartition homogène à la base du réacteur doivent être adaptés à la qualité des eaux brutes à traiter. En particulier, s'il s'agit d'eaux résiduaires (d'origine industrielle ou domestique), ces dispositifs ne doivent pas être sensibles aux corps étrangers ou aux matières en suspension de plus ou moins grande dimension, ainsi, bien entendu, qu'aux développements bactériens qui se forment dans ces dispositifs d'adduction et se traduisent par la formation de mucus plus ou moins collants et gênants, sur les surfaces solides.

Les dispositifs déjà décrits, par exemple dans le brevet U.S. 4202774 ou dans le brevet européen n° 0090450, comportent généralement plusieurs points d'injection du liquide à la base du réacteur. Ces dispositifs, s'ils permettent bien d'éviter que ne se produise une turbulence excessive de la matière solide granulaire dans le réacteur, présentent aussi des inconvénients.

Les matières volumineuses contenues dans l'eau à traiter peuvent à tout moment provoquer l'obstruction d'un des orifices d'alimentation et perturber la répartition correcte du débit sur toute la surface: le maintien dans le temps d'une répartition homogène devient aléatoire, et il est fort difficile, en conséquence, de l'assurer.

La présente invention pallie ces inconvénients en assurant de façon fiable et stable l'alimentation régulière et homogène en fluide de réacteurs à lit fluidisé de grande dimension, même si le fluide assurant la fluidisation véhicule des matières ou corps étrangers de grande dimension et/ou provoque des développements bactériens sur les surfaces fixes avec lesquelles il est en contact.

L'invention concerne un procédé destiné à assurer la fluidisation d'un lit filtrant de matériau granulaire dans un réacteur utilisé pour le traitement par voie biologique de fluides, notamment de liquides, et plus particulièrement d'eau, cette fluidisation étant réalisée au moyen de fluide à traiter introduit à la base du lit et s'écoulant du bas vers le haut dans le lit, ce procédé étant caractérisé en ce qu'il consiste à introduire le fluide, notamment le liquide, et en particulier l'eau à traiter, tangentiellement et à grande vitesse dans une couche de matériau granulaire disposée sous le lit de matériau granulaire filtrant, et dont la mise en mouvement est utilisée pour assurer une répartition uniforme de la vitesse de propagation du fluide dans la couche de matériau granulaire de traitement à fluidiser.

Le procédé suivant l'invention peut être mis en oeuvre au moyen d'un réacteur caractérisé en ce qu'il comporte, dans une même enveloppe, une enceinte à la base de laquelle est introduit, tangentiellement et à grande vitesse, le fluide, eau par exemple, à traiter, par lequel sera assurée la fluidisation du matériau granulaire de traitement, ladite enceinte contenant un matériau granulaire A et, superposée à cette enceinte, au moins une enceinte contenant le matériau granulaire B de traitement, à fluidiser, les différentes enceintes étant agencées et leurs dimensions choisies de façon à ce que la couche de matériau granulaire A joue uniquement un rôle de transfert du liquide à traiter à la couche B de matériau de traitement, dans des conditions telles que soit assurée une répartition homogène du liquide à traiter dans le matériau de traitement.

Le matériau A est utilisé dans la zone d'alimentation et de répartition dans le réacteur du fluide à traiter, le matériau B dans la zone de fluidisation proprement dite qui est la zone de travail du réacteur biologique.

Suivant l'invention le fluide, généralement l'eau, à traiter, qui est utilisée pour réaliser la fluidisation du matériau B est introduit dans la couche inférieure du matériau A à une vitesse comprise normalement entre 1,5 et 3,5 m/s, la puissance dissipée dans l'enceinte contenant ce matériau étant supérieure à 500 W/m$^3$.

La mise en mouvement rapide du matériau A permet d'éviter tout enrobage de celui-ci par des développements bactériens. Ce matériau ne participe pas à la réaction biologique et conserve des caractéristiques physiques stables, de sorte que la fonction de dissipation d'énergie et de répartition des vitesses de la couche inférieure est assurée pratiquement sans altération possible.

Sur le matériau B, au contraire, les vitesses du liquide adoptées pour assurer la fluidisation permettent le développement du film bactérien sur les grains constituant le matériau de lit fluidisé de traitement.

Les divers caractéristiques et avantages de l'invention ressortiront de la description qui va suivre, cette description se rapportant à des réalisations données uniquement à titre d'exemples non limitatifs.

Au cours de cette description on se réfère aux dessins ci-joints sur lesquels:

les Fig. 1 et 2 sont des vues schématiques en coupe de réacteurs suivant l'invention

la Fig. 3 est une vue, analogue aux précédentes, d'un réacteur muni d'un système de lavage du matériau B

la Fig. 4 est une vue schématique de ce système de lavage.

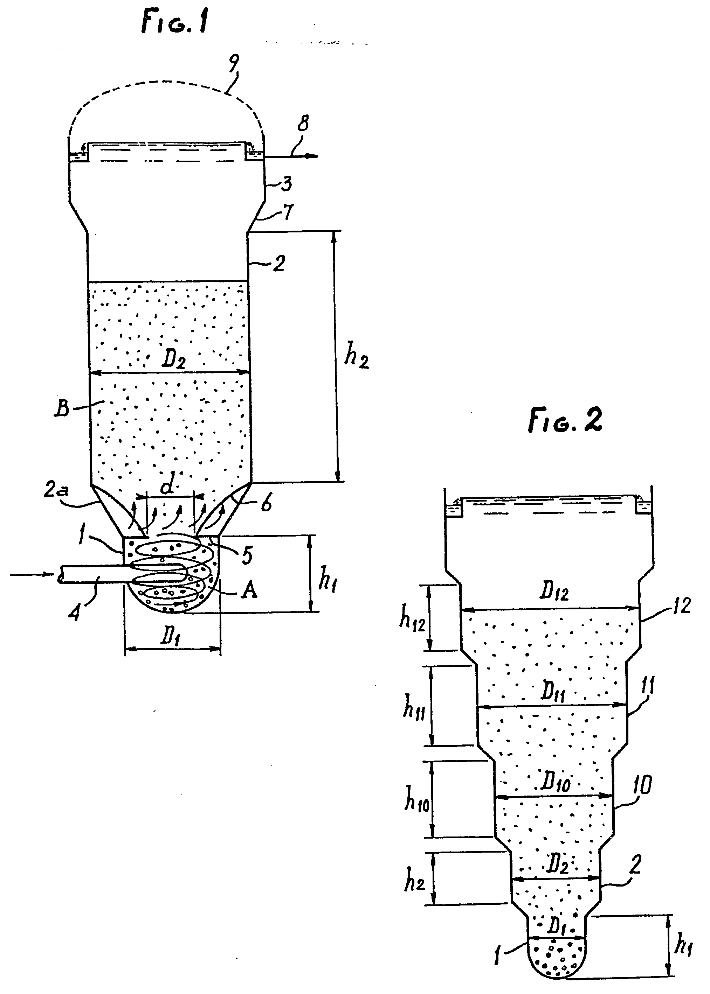

Dans l'exemple traité à la Fig. 1 le réacteur comporte essentiellement deux enceintes cylindriques superposées: une enceinte inférieure 1 de hauteur h$_1$ et de diamètre D$_1$ et une enceinte supérieure 2 de diamètre D$_2$ et de hauteur h$_2$, raccordées par une surface tronconique 2a.

L'enceinte 1 est remplie de matériau granulaire A de transfert, l'enceinte 2 est remplie de matériau granulaire B de traitement. L'eau à traiter, assurant la fluidisation du lit de matériau B est introduite par une tuyauterie unique 4 tangentiellement à l'enceinte 1, sous une vitesse comprise normalement, en débit nominal, entre 1,5 et 3,5 m/s. Elle assure la mise en mouvement de rotation du matériau A.

Un déflecteur annulaire 5 de diamètre intérieur d, associé éventuellement à des ailettes de guidage 6, permet d'empêcher la mise en rotation des couches inférieures du lit de matériau B fluidisé et d'assurer un redressement général vers le haut et une égale répartition des filets liquides.

Les diamètres et les hauteurs des enceintes 1 et 2 sont, conformément à l'invention, choisis de façon à ce que:

$$2 < \frac{D_2}{D_1} < 5 \qquad 1 \leqslant \frac{h_1}{D_1} < 1,8 \qquad \frac{h_2}{D_2} \geqslant 1$$

Quant au diamètre d du déflecteur 5 il est tel que:

$$1,2 < \frac{D_1}{d} < 1,5$$

Grâce aux dispositifs adoptées suivant l'invention, dans le lit fluidisé de matériau B la vitesse du fluide est répartie uniformément sur toute la surface du réacteur et elle est suffisante pour mettre le matériau B en expansion de 20 à 60%, sans provoquer ni l'entraînement du matériau hors du réacteur, ni causer l'arrachement du film biologique développé sur les grains de matériau B.

L'enceinte supérieure 2 est prolongée, dans l'exemple traité à la Fig. 1 par une troisième enceinte 3, reliée à l'enceinte 2 par une surface tronconique divergente 7. A l'intérieur de cette ultime enceinte du réacteur sont disposés tous les moyens nécessaires à la clarification et à la collecte de l'eau traitée qui est évacuée en 8. Si la fermentation développée dans le réacteur doit se dérouler à l'abri de l'air, et/ou sous contrôle d'atmosphère et/ou sous pression, le réacteur est fermé par un fond supérieur 9 qui est éventuellement équipé des dispositifs servant à la collecte et à l'évacuation de gaz produit par la réaction, ou résiduel de celle-ci.

L'exemple de réalisation suivant la Fig. 2 diffère de celui représenté à la Fig. 1 par l'existence d'une pluralité d'enceintes cylindriques superposées 2, 10, 11, 12, raccordées par des congés tronconiques et contenant le matériau granulaire B, surmontant l'enceinte unique 1 contenant le matériau A de transfert du liquide de traitement au matériau B.

Quel que soit le nombre des enceintes superposées comportant le matériau granulaire fluidisé de traitement B, les hauteurs et les diamètres de ces enceintes, sont, conformément à l'invention, établis de façon à satisfaire les relations suivantes:

$$2 < \frac{D_2}{D_1} < 5 \qquad 1 \leqslant \frac{h_1}{D_1} < 1,8$$

et, pour les n enceintes superposées à l'enceinte 2, le rapport entre le diamètre D$_n$ d'une enceinte de rang n et le diamètre de l'enceinte immédiatement inférieure de rang n−1 est tel que:

$$1,2 < \frac{D_n}{D_{n-1}} < 2 \qquad \text{avec} \qquad \frac{h_n}{D_n} > 1,2$$

Au démarrage de l'appareil, un classement granulométrique intervient: les matériaux les plus fins étant fluidisés dans la partie supérieure du réacteur et les plus gros dans la partie inférieure de sorte qu'une augmentation du nombre d'enceintes peut rendre plus uniforme le taux d'expansion du lit de matériau granulaire fluidisé.

Lorsqu'intervient la colonisation du matériau, au simple classement granulométrique se superpose un classement dû au changement de densité de celui-ci; en effet, lorsqu'il se couvre d'un film biologique, sa densité apparente décroît; lorsqu'il est repris par le système de nettoyage de la masse de contact et débarassé du film biologique, sa densité augmente. Les sections de petit diamètre du réacteur contiennent donc les particules les plus grosses, mais aussi celles de plus faible diamètre peu colonisées et cela dans la zone où la concentration en substrat est la plus forte, conduisant ainsi à un système autorégulé.

Les matériaux A et B constituent avantageusement des couples de matériaux associés, leurs caractéristiques étant choisies en fonction du rôle qu'ils sont appelés chacun à jouer dans l'appareil.

On peut par exemple utiliser les couples A et B de matériaux suivants:

|  | 1ère combinaison | | 2ème combinaison | | 3ème combinaison | |
|---|---|---|---|---|---|---|
| Nature | A sable | B pierre ponce | A sable | B sable | A sable | B silico-aluminate (Biolite) |
| Diamètre moyen (mm) | 0,9 | 0,25 | 1,8 | 0,25 | 0,7 | 0,3 |

L'invention permet de réaliser des réacteurs à lit fluidisé atteignant jusqu'à 10 m de diamètre, en utilisant une seule tuyauterie d'introduction de l'eau à traiter dans le réacteur, totalement extérieure à ce dernier.

Bie entendu l'invention peut être réalisée suivant de nombreuses variantes sans que l'on s'écarte pour autant de son cadre.

C'est ainsi que les enceintes recevant les matériaux A de transfert et B de traitement peuvent être de section non circulaire, ces enceintes étant alors raccordées par des surfaces en forme de tronc de pyramide. Les diamètres, tels que $D_1$, $D_2$ de la Fig. 1 sont alors ceux des cercles inscrits dans les sections des enceintes correspondantes.

Le matériau B qui s'enrobe progressivement d'un film de plus en plus important a tendance à devenir de plus en plus léger par rapport au liquide et il doit régulièrement être débarassé de la masse excédentaire qui l'entoure.

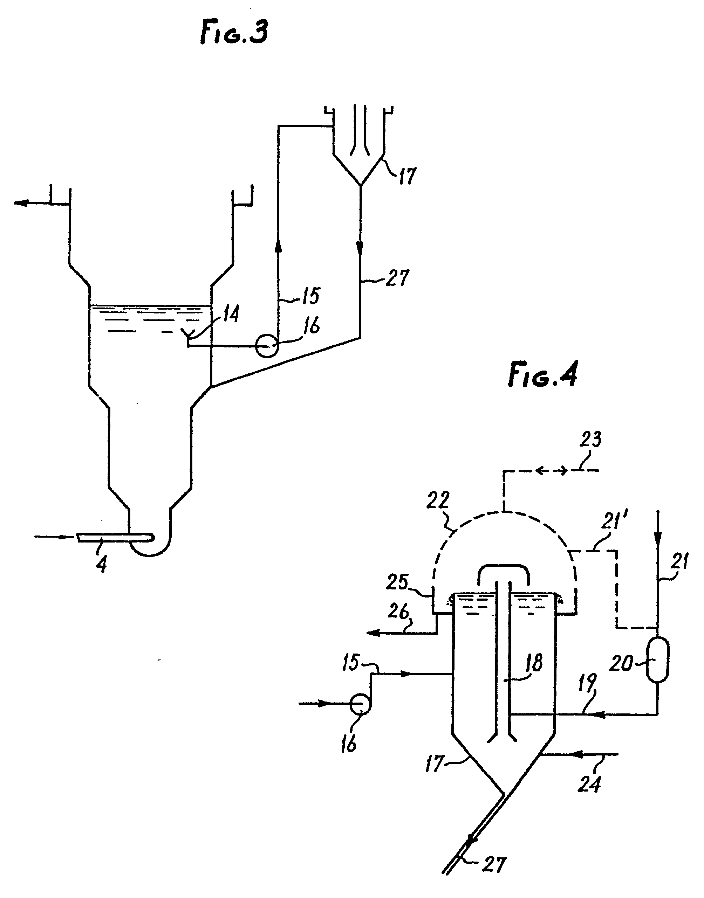

Un des moyens possibles pour assurer cette régénération du matériau B est de le faire transiter à travers un laveur à l'intérieur duquel est assuré une circulation interne au moyen d'un émulseur à gaz, ce gaz pouvant être de l'air ou un gaz enrichi en oxygène dans le cas de procédé aérobie, ou pouvant être le gaz produit par la fermentation dans le cas de procédé anaérobies ou anoxiques. Les Fig. 3 et 4 représentent cette disposition. Le matériau régénéré est ensuite retourné dans le réacteur.

Un ou plusieurs dispositifs de reprise du matériau 14 sont disposés à l'intérieur du réacteur et dans la partie supérieure du lit fluidisé. Le matériau à régénérer est dirigé par un jeu de tuyauteries 15 et un système de pompage 16 vers le laveur. Celui-ci comprend une enceinte 17 à l'intérieur de laquelle est disposé un émulseur 18 permettant, grâce à une alimentation 19 en gaz, d'assurer une recirculation interne: celle-ci provoque un brassage important du matériau qui est ainsi débarassé de son enrobage de matière organique excédentaire. Un compresseur 20 avec sa tuyauterie d'aspiration 21 fournit à l'émulseur le gaz sous une pression suffisante. Dans le cas de procédés anaérobies, cette tuyauterie d'aspiration 21' est en communication avec la chambre supérieure du laveur rempli de gaz qui est alors formé par une couverture 22 et est relié par la tuyauterie 23 à une chambre de stockage de gaz à volume variable (non représentée).

La régénération du matériau est assurée par les séquences suivantes:
— transfert de matériau B et de liquide du réacteur vers le laveur,
— recirculation interne de la suspension dans le laveur par envoi de gaz comprimé,
— arrêt de la recirculation et envoi d'un débit de liquide de rinçage par la tuyauterie 24 avec translation de bas en haut des particules séparées du matériau et évacuation de celles-ci par le dispositif 25 de récupération et la tuyauterie 26,
— transport du matériau régénéré vers le réacteur par la tuyauterie 27 avec envoi du liquide par la tuyauterie 24 pour assurer ce transfert.

Les séquences précédentes peuvent être réalisées en continu ou en discontinu et se prêtent aisément à l'automatisation.

**Revendications**

1. Procédé pour assurer la fluidisation d'un lit filtrant de matériau granulaire dans un réacteur utilisé pour le traitement par voie biologique de fluides, notamment de liquides, et plus particulièrement d'eau, cette fluidisation étant réalisée au moyen du fluide à traiter introduit à la base du lit et s'écoulant du bas vers le haut dans le lit, caractérisé en ce qu'il consiste à introduire le fluide, notamment le liquide, et en particulier l'eau à traiter, tangentiellement et à grande vitesse dans une couche de matériau granulaire disposée sous le lit de matériau granulaire filtrant, et dont la mise en mouvement est utilisée pour assurer une répartition uniforme de la vitesse de propagation du fluide dans la couche de matériau granulaire de traitement à fluidiser.

2. Réacteur pour la réalisation du procédé suivant la revendication 1, caractérisé en ce qu'il comporte, dans une même enveloppe, une enceinte (1) à la base de laquelle est introduit, tangentiellement et à grande vitesse, par au moins une canalisation (4), le fluide, eau par exemple, à traiter, par lequel sera assurée la fluidisation du matériau granulaire où s'effectue le traitement de ce fluide, ladite enceinte contenant un matériau granulaire A, et, superposée à cette enceinte, au moins une enceinte (2) contenant le matériau granulaire B de traitement, à fluidiser, les différentes enceintes étant agencées et leurs dimensions choisies de façon à ce que la couche de matériau granulaire A joue uniquement un rôle de transfert du fluide à traiter à la couche B du matériau de traitement, dans des conditions telles que soit assurée une répartition homogène du fluide à traiter dans le matériau de traitement.

3. Réacteur suivant la revendication 2, caractérisé en ce que les différentes enceintes constituant le réacteur sont de forme cylindrique et raccordées par des congés tronconiques.

4. Réacteur suivant l'une quelconque des revendications 2 et 3, caractérisé en ce que le diamètre $(D_1)$ et la hauteur $(h_1)$ de l'enceinte (1) contenant le matériau granulaire A, et le diamètre $(D_2)$ ainsi que la hauteur $(h_2)$ de l'enceinte (2) contenant le matériau granulaire B sont choisis de façon à satisfaire les relations suivantes:

$$2 < \frac{D_2}{D_1} < 5 \qquad 1 \leqslant \frac{h_1}{D_1} < 1,8 \qquad \frac{h_2}{D_2} \geqslant 1$$

5. Réacteur suivant l'une quelconque des revendications 2 à 4, caractérisé en ce qu'il comporte, superposées à l'enceinte unique (1) contenant le matériau A une pluralité d'enceintes également superposées (2, 10, 11, 12) contenant le matériau granulaire de traitement B fluidisé.

6. Réacteur suivant l'une quelconque des revendications 2 à 5, caractérisé en ce que, pour les n enceintes (10, 11, 12) superposées à l'enceinte (2), le rapport entre le diamètre $D_n$ d'une enceinte supérieure à l'enceinte (2) et de rang n et le diamètre $D_{n-1}$ de l'enceinte immédiatement inférieure, de rang n-1, est tel que:

$$1,2 < \frac{D_n}{D_{n-1}} \qquad avec \qquad \frac{h_n}{D_n} > 1,2$$

7. Réacteur suivant l'une quelconque des revendications 2 à 6, caractérisé en ce qu'il comporte un déflecteur annulaire (5) présentant un orifice de diamètre (d) disposé à la partie supérieure de l'enceinte inférieure (1) contenant le matériau A et de diamètre $(D_1)$.

8. Réacteur suivant la revendication 7, caractérisé en ce que le rapport du diamètre (d) de l'orifice présenté par le déflecteur (5) au diamètre $(D_1)$ de l'enceinte inférieure (1) contenant le matériau de transfert A est choisi de façon à ce que:

$$1,2 < \frac{D_1}{d} < 1,5$$

9. Réacteur suivant l'une quelconque des revendications 7 et 8, caractérisé en ce qu'au déflecteur annulaire (5) sont associées des ailettes (6) de guidage.

10. Réacteur suivant l'une quelconque des revendications précédentes, caractérisé en ce que les matériaux granulaires A et B constituent des couples dont les caractéristiques sont choisies en fonction du rôle dévolu à chacun dans le réacteur.

11. Réacteur suivant l'une quelconque des revendications précédentes, caractérisé en ce que le fluide à traiter servant à la fluidisation du matériau granulaire de traitement est introduit dans le réacteur sous une vitesse comprise, en débit nominal, entre 1,5 et 3,5 m/s.

12. Réacteur suivant l'une quelconque des revendications précédentes, caractérisé en ce qu'il est équipé d'un dispositif extérieur de régénération de la masse granulaire B, permettant de la prélever dans la partie supérieure du réacteur, de la faire transiter dans un laveur équipé d'un émulseur à gaz, assurant une intense recirculation interne, et de restituer le matériau régénéré au réacteur.

**Patentansprüche**

1. Verfahren zur Verwirbelung eines Filterbettes aus Granulat in einem Reaktor zur biologischen Behandlung von Fluiden, vor allem Flüssigkeiten und insbesondere Wasser, wobei diese Verwirbelung dadurch erreicht wird, dass das zu behandelnde Fluid am Grund des Bettes eingeleitet wird und im Bett vom Boden bis zur Oberfläche strömt, dadurch gekennzeichnet, dass das Fluid, vor allem eine Flüssigkeit und insbesondere zu behandelndes Wasser, tangential und mit hoher Geschwindigkeit in eine Granulatschicht, die unter dem eigentlichen Filterbett aus Granulat angeordnet ist, eingeleitet wird und dass die Bewegungsenergie des Fluides zur Erreichung einer gleichmässigen Geschwindigkeitsverteilung bei der Ausbreitung des Fluides in der Schicht des Behandlungsgranulates zur Verwirbelung benutzt wird.

2. Reaktor zur Durchführung des Verfahrens nach Anspruch 1, gekennzeichnet durch eine Kammer (1), gefüllt mit einem Granulat A, an deren Boden über mindestens eine Rohrleitung (4) das zu behandelnde Fluid, beispielsweise Wasser, tangential und mit hoher Geschwindigkeit eingeleitet wird, wodurch die Verwirbelung des Granulats, in dem die Behandlung dieses Fluides stattfindet, ermöglicht wird, und über dieser Kammer im selben Gehäuse mindestens eine weitere Kammer (2), die das zu verwirbelnde Behandlungsgranulat B enthält, wobei die verschiedenen Kammern so angeordnet und ausgelegt sind, dass die Granulatschicht A nur die Überführung des zu behandelnden Fluides in die Granulatschicht B, in der die Behandlung stattfindet, derart bewirkt, dass eine gleichmässige Verteilung des zu behandelnden Fluides im Behandlungsmaterial gewährleistet ist.

3. Reaktor nach Anspruch 2, dadurch gekennzeichnet, dass die verschiedenen Kammern, die den Reaktor bilden, zylindrisch und durch kegelstumpfartige Abschnitte verbunden sind.

4. Reaktor nach einem der Ansprüche 2 oder 3, dadurch gekennzeichnet, dass der Durchmesser ($D_1$) und die Höhe ($h_1$) der Kammer (1), die das Granulat A enthält, und der Durchmesser ($D_2$) und die Höhe ($h_2$) der Kammer (2), die das Granulat B enthält, so gewählt sind, dass folgende Bedingungen erfüllt sind:

$$2 < \frac{D_2}{D_1} < 5 \qquad 1 \leqslant \frac{h_1}{D_1} < 1{,}8 \qquad \frac{h_2}{D_2} \geqslant 1$$

5. Reaktor nach einem der Ansprüche 2 bis 4, dadurch gekennzeichnet, dass über der einzigen Kammer (1), die das Material A enthält, mehrere übereinander angeordnete Kammern (2, 10, 11, 12), die das zu verwirbelnde Behandlungsgranulat B enthalten, angeordnet sind.

6. Reaktor nach einem der Ansprüche 2 bis 5, dadurch gekennzeichnet, dass für die n Kammern (10, 11, 12) die über der Kammer (2) angeordnet sind, für das Verhältnis zwischen dem Durchmesser $D_n$ einer Kammer oberhalb der Kammer (2) mit der Ordnungszahl n und dem Durchmesser $D_{n-1}$ der Kammer direkt darunter mit der Ordnungszahl n−1 gilt:

$$1{,}2 < \frac{D_n}{D_{n-1}} \qquad \text{mit} \qquad \frac{h_n}{D_n} > 1{,}2$$

7. Reaktor nach einem der Ansprüche 2 bis 6, gekennzeichnet durch einen ringförmigen Abweiser (5), der eine Öffnung mit dem Durchmesser (d) aufweist, die im oberen Bereich der unteren Kammer (1), die das Material A enthält und den Durchmesser ($D_1$) aufweist, angeordnet ist.

8. Reaktor nach Anspruch 7, dadurch gekennzeichnet, dass für das Verhältnis zwischen dem Durchmesser (D) der Öffnung des Abweisers (5) und dem Durchmesser ($D_1$) der unteren Kammer (1), die das Übertragungsmaterial A enthält, gilt:

$$1{,}2 < \frac{D_1}{d} < 1{,}5$$

9. Reaktor nach einem der Ansprüche 7 und 8, dadurch gekennzeichnet, dass der ringförmige Abweiser (5) Führungsrippen (6) aufweist.

10. Reaktor nach einem der vorstehenden Ansprüche, dadurch gekennzeichnet, dass die Granulate A und B aufeinander abgestimmt sind, wobei ihre charakteristischen Eigenschaften abhängig von ihrer jeweils zugedachten Funktion im Reaktor gewählt werden.

11. Reaktor nach einem der vorstehenden Ansprüche, dadurch gekennzeichnet, dass das zu behandelnde Fluid, das die Verwirbelung des Behandlungsgranulates bewirkt, bei Nennleistung mit einer Geschwindigkeit von 1,5 bis 3,5 m/s in den Reaktor eingeleitet wird.

12. Reaktor nach einem der vorstehenden Ansprüche, gekennzeichnet durch eine externe Vorrichtung zur Regenerierung des Granulates B, die es ermöglicht, das Granulat im oberen Teil des Reaktors zu entnehmen, einer Reinigungsanlage mit einer Gasemulsionsanlage, die eine intensive innere Rezirkulation gewährleistet, zuzuführen und darauf das regenerierte Material dem Reaktor wieder aufzugeben.

**Claims**

1. A process to ensure fluidisation of a granular material filter bed in a reactor used for the biological treatment of fluids, especially liquids, and more particularly water, this fluidisation being effected by means of the fluid to be treated introduced at the base of the bed and flowing upwards in the bed, characterized in that it comprises introducing the fluid, especially the liquid, and in particular the water to be treated, tangentially and at high speed into a layer of granular material which is arranged under the bed of granular filtering material and the setting into motion of which is used to ensure uniform distribution of the speed of propagation of the fluid in the bed of granular treatment material to be fluidized.

2. A reactor for implementing the process according to claim 1, characterized in that it comprises, in one and the same casing, a chamber 1 at the base of which the fluid, water for example, to be treated is introduced tangentially and at high speed by means of a pipe (4), by means of which fluid the fluidisation is ensured of the granular material where the treatment of this fluid is effected, said chamber containing a granular material A and, superposed on this chamber, at least one chamber (2) containing the granular treatment material B to be fluidised, the different chambers being arranged in such a way and their dimensions being such that the layer of granular material A acts solely as a means of transfer of the fluid to be treated to the layer B of the treatment material, in conditions such that homogeneous distribution is ensured of the fluid to be treated in the treatment material.

3. A reactor according to Claim 2, characterized in that the different chambers constituting the reactor are cylindrical in form and connected by truncated fillets.

4. A reactor according to either one of claims 2 and 3, characterized in that the diameter ($D_1$) and the height ($h_1$) of the chamber (1) containing the granular material A, and the diameter ($D_2$) and height ($h_2$) of the chamber (2) containing the granular material B are selected so as to satisfy the following relationships:

$$2 < \frac{D_2}{D_1} < 5 \qquad 1 \leqslant \frac{h_1}{D_1} < 1.8 \qquad \frac{h_2}{D_2} \geqslant 1$$

5. A reactor according to any one of claims 2 to 4, characterized in that it comprises, superposed on the single chamber (1) containing the material A, a plurality of similarly superposed chambers (2, 10, 11, 12) containing the fluidised granular treatment material B.

6. A reactor according to any one of claims 2 to 5, characterized in that, for the n chambers (10, 11, 12) superposed on the chamber (2), the ratio between the diameter $D_n$ of a chamber superior to the chamber (2) and in position n and the diameter $D_{n-1}$ of the chamber immediately therebelow, in position n−1, is such that:

$$1.2 < \frac{D_n}{D_{n-1}} \quad \text{with} \quad \frac{h_n}{D_n} > 1.2$$

7. A reactor according to any one of claims 2 to 6, characterized in that it comprises an annular deflector (5) with an orifice of diameter (d) arranged at the upper part of the lower chamber (1) containing the material A and of diameter ($D_1$).

8. A reactor according to claim 7, characterized in that the ratio of the diameter (d) of the orifice provided in the deflector (5) to the diameter ($D_1$) of the lower chamber (1) containing the transfer material A is such that:

$$1.2 < \frac{D_1}{d} < 1.5$$

9. A reactor according to either one of claims 7 and 8, characterized in that guide vanes (6) are associated with the annular deflector (5).

10. A reactor according to any one of the preceding claims, characterized in that the granular materials A and B constitute pairs whose characteristics are selected according to the role allotted to each in the reactor.

11. A reactor according to any one of the preceding claims, characterized in that the fluid to be treated and serving to fluidise the granular treatment material is introduced into the reactor at a speed, at nominal output, of between 1.5 and 3.5 m/s.

12. A reactor according to any one of the preceding claims, characterized in that it is equipped with an external device for regenerating the granular mass B, enabling removal thereof from the upper part of the reactor, transfer thereof into a washer equipped with a gas emulsifier ensuring intense internal recirculation, and return of the regenerated material to the reactor.

Fig.1

Fig.2

## Fig.3

## Fig.4